(19) Europäisches Patentamt

European Patent Office

Office européen des brevets

(11) **EP 1 060 908 A2**

(12) **EUROPÄISCHE PATENTANMELDUNG**

(43) Veröffentlichungstag:
20.12.2000 Patentblatt 2000/51

(51) Int. Cl.⁷: **B42D 15/10**

(21) Anmeldenummer: **00111391.9**

(22) Anmeldetag: **26.05.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **11.06.1999 DE 19926689**

(71) Anmelder:
**HSM Holographic Systems München GmbH
85652 Ottersberg (DE)**

(72) Erfinder:
• **Dausmann, Günther
85435 Erding (DE)**
• **Yang, Zishao, Dr.
85435 Erding (DE)**

(74) Vertreter:
**Gossel, Hans K., Dipl.-Ing. et al
Lorenz-Seidler-Gossel
Widenmayerstrasse 23
80538 München (DE)**

(54) **Optisches Echtheitsmerkmal**

(57)  Die Erfindung betrifft ein optisches Echtheitsmerkmal zur Anbringung auf beliebigen Trägern, beispielsweise auf Dokumenten, sowie ein Verfahren zum Auslesen des erfindungsgemäßen Echtheitsmerkmals. Mit Hilfe des erfindungsgemäßen Sicherheitsmerkmals wird einem auf das Sicherheitsmerkmal einfallenden Lichtstrahl ein Phasenprofil aufmoduliert. Das aufgeprägte Phasenprofil kann beispielsweise mittels des Phasenkontrastverfahrens, mittels des Schlierenverfahrens oder mittels eines Interferometers in eine für das Auge sichtbare Amplitudenmodulation umgewandelt werden. Insbesondere kann das Sicherheitsmerkmal ein auf dem Träger angebrachtes Hologramm umfassen, wobei ein auf das Hologramm einfallender Lichtstrahl einen Objektstrahl mit aufmoduliertem Phasenprofil rekonstruiert.

$$\Delta\Phi = \frac{2\pi}{\lambda} n \cdot \Delta d$$

Fig. 1

**Beschreibung**

Die Erfindung betrifft ein optisches Echtheitsmerkmal zur Anbringung auf beliebigen Trägern, beispielsweise auf Dokumenten, Ausweisen, Banknoten oder Plastikkarten, sowie ein Verfahren zum Auslesen des erfindungsgemäßen Echtheitsmerkmals.

Dokumente, Urkunden, Banknoten, Ausweise, Plastikkarten etc. lassen sich mit Hilfe moderner hochauflösender Farbscanner sowie mit Hilfe von Farblaserdruckern bzw. Thermosublimationsdruckern detailgenau und farbecht reproduzieren. Auch durch die allgemeine Erhältlichkeit von Farbkopierern ist es wesentlich einfacher geworden, hochwertige Fälschungen herzustellen.

Es besteht daher ein Bedürfnis, Dokumente, Ausweise, Banknoten, Wertpapiere, Plastikkarten etc. durch zusätzlich aufgebrachte Sicherheitsmerkmaie fälschungssicher zu machen. Durch derartige Sicherheitsmerkmale kann zumindest bewirkt werden, daß die Herstellung einer qualitativ hochwertigen Fälschung stark verteuert wird. Als derartige Sicherheitsmerkmale sind Wasserzeichen, Seidenfäden, verschlungene Linienstrukturen (Guilloche-Strukturen), sowie die Verwendung besonderen Papiers bekannt. Auch das Aufbringen von metallisierten Prägehologrammen auf Banknoten, Kreditkarten und Eurocheque-Karten hat sich inzwischen allgemein durchgesetzt.

Wünschenswert wäre es aber, ein Sicherheitsmerkmal auf dem jeweiligen Träger anbringen zu können, das nicht ohne weiteres als Sicherheitsmerkmal zu erkennen ist. Ein derartiges Sicherheitsmerkmal, das überhaupt erst bei der Anwendung komplexer Techniken erkennbar wird, hätte den Vorteil, vom breiten Verkehr nicht als Sicherheitsmerkmal wahrgenommen zu werden. Ein derartiges verstecktes Sicherheitsmerkmal würde bei vielen Fälschungen nicht berücksichtigt werden.

Aufgabe der Erfindung ist es daher, ein Sicherheitsmerkmal zur Verfügung zu stellen, welches sich auf beliebige Träger wie beispielsweise Dokumente, Banknoten, Ausweise, Plastikkarten etc. aufbringen läßt, wobei die im Sicherheitsmerkmal enthaltene Information beim Betrachten nicht unmittelbar erkennbar ist.

Diese Aufgabe der Erfindung wird durch ein Sicherheitsmerkmal gemäß Anspruch 1 bzw. 14, durch ein Verfahren zum Auslesen des erfindungsgemäßen Sicherheitsmerkmals nach den Ansprüchen 10 bzw. 15, sowie durch ein Verfahren zur Herstellung des erfindungsgemäßen Sicherheitsmerkmals gemäß Anspruch 18 gelöst.

Das erfindungsgemäße Sicherheitsmerkmal kann auf einem beliebigen Träger, beispielsweise auf einem Dokument, einem Ausweis, einer Banknote, einer Plastikkarte etc, angebracht sein. Durch das Sicherheitsmerkmal wird einem auf das Sicherheitsmerkmal einfallenden Lichtstrahl ein Phasenprofil aufmoduliert.

Durch das Sicherheitsmerkmal werden Phasenverschiebungen zwischen den einzelnen räumlichen Bereichen einer einfallenden Wellenfront erzeugt, wodurch der Wellenfront ein Phasenprofil aufmoduliert wird. Während das Auge ein einer Wellenfront aufgeprägtes Amplitudenprofil als Helligkeitsprofil unmittelbar erkennen kann, erscheint eine Wellenfront, der ein Phasenprofil aufmoduliert ist, als gleichmäßig helle Fläche. Während also ein Amplitudenprofil unmittelbar erkennbar ist, handelt es sich bei einem Phasenprofil um versteckte Information, die erst durch technische Hilfsmittel sichtbar gemacht werden kann. Daher stellt ein Sicherheitsmerkmal, welches einem Lichtstrahl ein Phasenprofil aufprägt, ein verstecktes Sicherheitsmerkmal dar, denn das aufgeprägte Phasenprofil ist zunächst unsichtbar. Das erfindungsgemäße Sicherheitsmerkmal bleibt daher in vielen Fällen unerkannt und kann gerade dadurch seinen Zweck, die Echtheit eines Dokuments, eines Ausweises, einer Banknote, einer Plastikkarte etc. zu gewährleisten, um so besser erfüllen.

Bei einer weiteren vorteilhaften Ausgestaltung der Erfindung ist auf dem jeweiligen Träger eine Schicht aufgebracht, wobei die Schicht eine variierende Schichtdicke aufweist, und wobei durch die Schicht einem einfallenden Lichtstrahl ein der Schichtdickenvariation entsprechendes Phasenprofil aufmodulierbar ist.

Wenn eine Wellenfront eine transparente Schicht durchläuft, welche eine Schichtdickenvariation aufweist, so verursacht die Schichtdickenvariation unterschiedliche optische Weglängen durch die Schicht und damit eine Phasenmodulation. Nach dem Durchlaufen der transparenten Schicht ist ein Strahl, der einen Bereich hoher Schichtdicke durchdrungen hat, phasenverschoben gegenüber einem Strahl, der einen Bereich geringer Schichtdicke durchdrungen hat.

Derartige transparente Schichten können zusätzlich mit einer reflektierenden Schicht versehen werden, so daß der einfallende Lichtstrahl zunächst die transparente Schicht durchdringt, anschließend an der reflektierenden Schicht gespiegelt wird, und daraufhin die transparente Schicht ein zweites Mal durchläuft. Hier wird die Phasenmodulation durch das zweifache Durchlaufen des Schichtdickenprofils aufgeprägt.

Gemäß einer weiteren vorteilhaften Ausgestaltung der Erfindung umfaßt das Sicherheitsmerkmal eine auf dem jeweiligen Träger angebrachte Schicht, wobei die Schicht einen variierenden Brechungsindex aufweist.

Eine Wellenfront, welche eine transparente Schicht mit variierendem Brechungsindex durchläuft, erfährt dadurch eine Phasenmodulation. Ein Strahl, der einen Bereich mit hohem Brechungsindex durchlaufen hat, ist gegenüber einem Strahl, der durch einen Bereich mit niedrigem Brechungsindex geführt wurde, phasenverschoben.

Eine Phasenmodulation wird jeweils dadurch erzeugt, daß Teile einer Wellenfront beim Durchgang durch eine Schicht unterschiedliche optische Weglängen durchlaufen, und zwar unabhängig davon, ob die unterschiedlichen optischen Weglängen durch eine Brechungsindexvariation oder durch eine Schichtdickenvariation erzeugt werden. Eine Brechungsindexvariation hat aber gegenüber einer Schichtdickenvariation den Vorteil, daß man sie an der Schicht weniger leicht wahrnehmen kann.

Gemäß einer weiteren vorteilhaften Ausgestaltung der Erfindung umfaßt das Sicherheitsmerkmal ein auf dem jeweiligen Träger angebrachtes Hologramm, wobei durch einen auf das Hologramm einfallenden Lichtstrahl ein Objektstrahl mit einem aufmodulierten Phasenprofil rekonstruiert werden kann.

Diese Lösung hat den Vorteil, daß ohne Hilfsmittel weder an dem Hologramm noch an dem das Hologramm verlassenden Objektstrahl die aufgeprägte Information erkannt werden kann. Das Hologramm als solches stellt bereits ein schwer nachzuahmendes Sicherheitsmerkmal dar. Man würde aber nicht vermuten, daß das Hologramm selbst noch zusätzliche versteckte Information enthält. Ein Sicherheitsmerkmal, das gar nicht erst als solches erkannt wird, stellt aber den besten Schutz vor Fälschungen dar.

Vorteilhaft ist es, wenn der auf das Hologramm einfallende Lichtstrahl ein Bild eines Phasenobjekts erzeugt. Dies ist dann der Fall, wenn das Hologramm die holografische Aufzeichnung eines Phasenobjekts enthält, welches durch den einfallenden Lichtstrahl rekonstruiert wird. Ein Phasenobjekt ist als solches nicht erkennbar, daher ist auch das Bild des Phasenobjekts nur mit Hilfsmitteln erkennbar.

Vorzugsweise wird das Hologramm durch Aufzeichnung des Interferenzbildes hergestellt, welches durch die Interferenz eines Referenzstrahls und eines durch ein Phasenobjekt geführten Objektstrahls entsteht. Wenn das so hergestellte Hologramm mit dem Referenzstrahl beaufschlagt wird, kann der Objektstrahl rekonstruiert werden. Der durch das Interferenzbild rekonstruierte Objektstrahl weist wieder dieselbe Phasenmodulation auf wie der für die Aufzeichnung verwendete Objektstrahl, denn in dem Interferenzbild ist die komplette Information über den aufgezeichneten Objektstrahl enthalten.

Um das erfindungsgemäße Sicherheitsmerkmal auszulesen, wird es mit einem Lichtstrahl beaufschlagt, wobei durch das Sicherheitsmerkmal dem Lichtstrahl ein Phasenprofil aufmoduliert wird. Anschließend wird das aufmodulierte Phasenprofil in eine Amplitudenmodulation umgewandelt. Dies ist erforderlich, um die an sich unsichtbare Phaseninformation sichtbar zu machen.

Ein Verfahren, um aus einer Phasenmodulation eine Amplitudenmodulation zu erzeugen, ist das Phasenkontrastverfahren. Dabei wird in eine Fourierebene des Strahlengangs ein sog. Phasenring eingebracht. Dieser Phasenring erzeugt eine Phasenverschiebung zwischen dem Licht, das den Ringbereich des Phasenrings durchdringt, und dem restlichen Licht. Dies führt dazu, daß die Phaseninformation als Amplitudenbild sichtbar wird.

Eine weitere gängige Methode, um Phasenmodulationen sichtbar zu machen, ist das sog. Schlierenverfahren. Bei diesem Verfahren wird in einer Fourierebene des Strahlengangs die Nullte Ordnung herausgefiltert. Das Fehlen der Nullten Ordnung führt dann zur Entstehung eines Amplitudenbildes, das die Phaseninformation widerspiegelt.

Eine weitere vorteilhafte Möglichkeit, das aufmodulierte Phasenprofil sichtbar zu machen, stellt die Verwendung eines Interferometers dar. Dabei wird der phasenmodulierte Strahl mit einer nicht modulierten ebenen Welle zur Interferenz gebracht. Je nach Phasenlage der beiden sich überlagernden Wellen entsteht konstruktive oder destruktive Interferenz, was bedeutet, daß die Phasenmodulation in eine Helligkeitsverteilung umgewandelt wird.

Gemäß einer weiteren vorteilhaften Ausführungsform der Erfindung umfaßt das Sicherheitsmerkmal ein auf einem Träger, beispielsweise einem Dokument, einem Ausweis, einer Banknote oder einer Plastikkarte aufgebrachtes Hologramm mit folgenden Eigenschaften: Durch einen unter einem ersten Einfallswinkel auf das Hologramm einfallenden ersten Lichtstrahl ist ein erster Objektstrahl mit einem aufmodulierten Phasenprofil rekonstruierbar. Durch einen unter einem zweiten Einfallswinkel auf das Hologramm einfallenden zweiten Lichtstrahl ist ein zweiter Objektstrahl rekonstruierbar, welcher keine Phasenmodulation aufweist. Aus der Interferenz zwischen dem ersten und dem zweiten Objektstrahl entsteht eine Amplitudenmodulation, die dem aufmodulierten Phasenprofil des ersten Objektstrahls entspricht.

Ein derartiges Hologramm kann durch die Aufzeichnung von zwei Interferenzbildern hergestellt werden. Das erste Interferenzbild, das aufgezeichnet werden muß, entsteht durch die Interferenz eines unter einem ersten Einfallswinkel einfallenden ersten Referenzstrahls und eines ersten Objektstrahls, wobei dem ersten Objektstrahl ein Phasenprofil aufmoduliert ist. Das zweite Interferenzbild entsteht durch die Interferenz eines unter einem zweiten Einfallswinkel einfallenden zweiten Referenzstrahls und eines zweiten Objektstrahls, wobei dem zweiten Objektstrahl kein Phasenprofil aufmoduliert ist.

Das hier vorgestellte doppelbelichtete Hologramm bietet einen sehr zuverlässigen Echtheitsnachweis. Um die gespeicherte Information sichtbar zu machen, müssen zwei Referenzstrahlen der richtigen Wellenlänge exakt unter den vordefinierten Einfallswinkeln das Hologramm beaufschlagen. Nur dann können die beiden Objektwellen rekonstruiert werden, und nur bei phasenrichtiger Rekonstruktion der beiden Objektwellen kommt es zu der Interferenz, die die aufgeprägte Information sichtbar werden läßt. Wird nur einer der beiden Referenzstrahlen eingestrahlt, so entsteht das Interferenzbild nicht.

Bei der erfindungsgemäßen Lösung mit zwei Objektstrahlen handelt es sich gewissermaßen um ein "integriertes holografisches Interferometer". Dabei wird ein zweite, unmodulierte Strahl, der mit dem ersten Objektstrahl interferiert, ebenfalls aus dem Hologramm heraus erzeugt (deshalb der Ausdruck "integriertes Interferometer"). Der erste und der zweite Objektstrahl können beide in dem Hologramm gespeichert werden, indem das Hologramm doppelt belichtet wird. Wenn das Hologramm mit einem unter einem zweiten Einfallswinkel einfallenden zweiten Referenzstrahl beaufschlagt wird, wird der zweite Objektstrahl rekonstruiert. Mit Hilfe dieser Lösung kann also auf komplizierte optische Ausleseapparaturen verzichtet werden.

Das doppelbelichtete Hologramm kann ausgelesen werden, indem es mit einem ersten Lichtstrahl unter einem ersten Einfallswinkel und mit einem zweiten Lichtstrahl unter einem zweiten Einfallswinkel beaufschlagt wird. Dadurch werden die beiden Objektstrahlen rekonstruiert, und deren Interferenz kann nun erfaßt werden.

Vorzugsweise wird das entstehende Interferenzbild auf einer Mattscheibe aufgefangen. Dies ist die einfachste und billigste Lösung.

Alternativ dazu kann die Interferenz der beiden Objektstrahlen auch mit einer Kamera erfaßt werden. Dies hat den Vorteil, daß das Interferenzbild besser ausgewertet werden kann. Insbesondere ist es möglich, das Interferenzbild mittels eines Bildverarbeitungssystems weiter auszuwerten.

Weitere Einzelheiten und Vorteile der Erfindung werden nachfolgend anhand mehrerer in den Zeichnungen dargestellter Ausführungsbeispiele erläutert. Es zeigen:

Fig. 1    die Erzeugung einer phasenmodulierten Welle mittels einer transparenten Folie mit variierender Schichtdicke:

Fig. 2    die Erzeugung einer phasenmodulierten Welle mittels einer transparenten Folie, welche eine Brechungsindexvariation aufweist;

Fig. 3    eine Anordnung zur holografischen Aufzeichnung einer phasenmodulierten Objektwelle;

Fig. 4    die Rekonstruktion einer phasenmodulierten Objektwelle bei einem gemäß Fig. 3 hergestellten Reflexionshologramm;

Fig. 5    das Funktionsprinzip der Dunkelfeldmethode, des Schlierenverfahrens sowie des Phasenkontrastverfahrens;

Fig. 6    die Überlagerung einer phasenmodulierten Welle mit einer ebenen Welle in einem Interferometer;

Fig. 7A    die erste Belichtung eines doppelbelichteten Hologramms, bei der der Objektstrahl keine Phasenmodulation aufweist;

Fig. 7B    die zweite Belichtung eines Hologramms, bei der der Objektstrahl durch ein Phasenobjekt geführt ist, das eine Phasenmodulation bewirkt;

Fig. 8    die Rekonstruktion sowohl des phasenmodulierten als auch des nicht phasenmodulierten Objektstrahls durch zwei Referenzstrahlen;

Fig. 9A    das Interferenzbild des phasenmodulierten und des nicht phasenmodulierten Objektstrahls, wie es auf einer Mattscheibe aufgefangen werden kann, die relativ zur Hologrammebene geneigt ist;

Fig. 9B    das Interferenzbild des phasenmodulierten und des nicht phasenmodulierten Objektstrahls, wie es auf einer Mattscheibe aufgefangen werden kann, die zur Hologrammebene parallel ist.

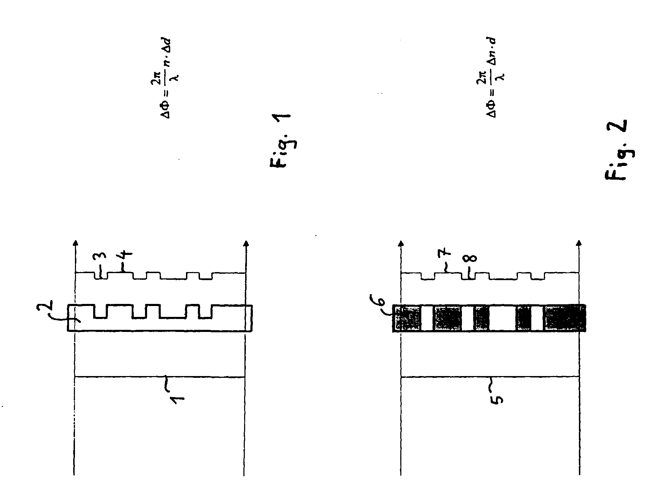

In Fig. 1 ist dargestellt, wie eine ebene Welle 1 ein transparentes Phasenobjekt 2 durchdringt, wobei durch das Phasenobjekt 2 eine Information als Phasenmodulation auf die Lichtwelle 1 aufgeprägt wird.

In Fig. 1 ist dargestellt, wie einer einfallenden Wellenfront 1 mittels einer transparenten Folie 2 eine Phasenmodulation aufgeprägt werden kann. Dazu weist die transparente Folie 2 Bereiche unterschiedlicher Schichtdicke auf. Ein Lichtstrahl 3, der einen Bereich geringer Schichtdicke durchdrungen hat, erscheint gegen einen Lichtstrahl 4, der einen Bereich hoher Schichtdicke durchdrungen hat, phasenverschoben. Die Phasenverschiebung ist dabei proportional zur Differenz des optischen Weges:

$$\Delta\phi = \frac{2\pi}{\lambda}\, n \cdot \Delta d$$

Auf diese Weise kann mittels einer Folie 2 einer einfallenden Welle eine Information als Phasenmodulation aufgeprägt werden.

In Fig. 1 wird die transparente Folie 2 in Transmission von der Wellenfront 1 durchdrungen. Genauso gut ist es jedoch möglich, die Folie 2 zusätzlich mit einer reflektierenden Schicht zu versehen und so mit einer ebenen Wellenfront zu beaufschlagen, daß die Wellenfront das Schichtdickenprofil zweimal durchquert. Entsprechend ergibt sich bei dieser Reflexionsgeometrie die doppelte Phasenverschiebung.

In Fig. 2 ist eine Folie 6 dargestellt, die Bereiche unterschiedlichen Brechungsindexes aufweist. Wenn die transparente Folie 6 von einer Wellenfront 5 durchdrungen wird, dann wird dieser Wellenfront das Brechungsindexprofil als Phasenprofil aufgeprägt. Ein Lichtstrahl 7, der einen Bereich hohen Brechungsindexes durchquert hat, erscheint gegenüber einem Lichtstrahl 8, der durch einen Bereich niedrigen Brechungsindexes gegangen ist, phasenverschoben. Bei konstanter Schichtdicke der transmittierenden Schicht ergibt sich die Phasenverschiebung, die proportional zu dem Unterschied im Brechungsindex ist:

$$\Delta\phi = \frac{2\pi}{\lambda} \, \Delta n \cdot d$$

Auch eine derartige Folie 6, deren Brechungsindex variiert, kann zusätzlich mit einer reflektierenden Schicht versehen werden und in Reflexionsgeometrie verwendet werden.

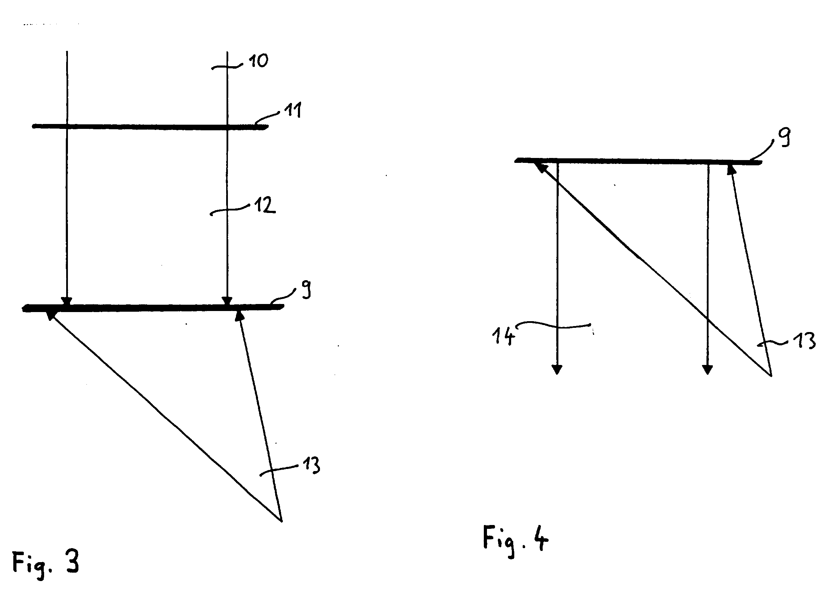

Auch mittels eines Hologramms kann einem einfallenden Lichtstrahl ein Phasenprofil aufmoduliert werden. Die Anordnung zur Belichtung eines derartigen als Sicherheitsmerkmal geeigneten Hologramms ist in Fig. 3 dargestellt. Zunächst wird eine Objektwelle erzeugt, die das gewünschte Phasenprofil aufweist. Dazu durchdringt eine Lichtwelle 10 ein Phasenobjekt 11, das der Welle die gewünschte Phasenmodulation aufprägt. Die phasenmodulierte Objektwelle 12 beaufschlagt den holografischen Film 9 von einer Seite, und von der anderen Seite fällt der Referenzstrahl 13 auf den holografischen Film. Das entstehende Interferenzbild wird als Hologramm aufgezeichnet. Da Objekt- und Referenzstrahl von entgegengesetzten Seiten her auf den holografischen Film treffen, wird ein Reflektionshologramm erzeugt. Ein Transmissionshologramm ließe sich dadurch erzeugen, daß Objekt- und Referenzstrahl von der gleichen Seite her auf den holografischen Film einfallen.

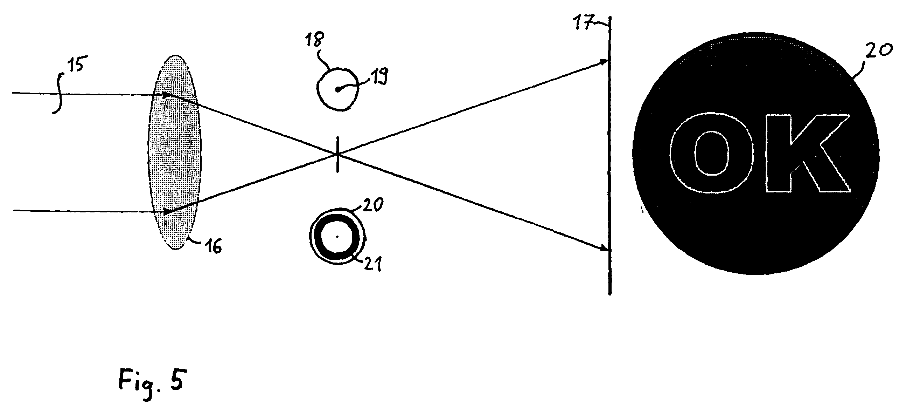

In Fig. 4 ist gezeigt, wie mittels des Hologramms 9 die ursprüngliche phasenmodulierte Objektwelle wieder rekonstruiert werden kann. Dazu wird das Reflexionshologramm 9 von einem Referenzstrahl 13 beaufschlagt, der den Objektstrahl 14 rekonstruiert. Der rekonstruierte Objektstrahl 14 weist dieselbe Phasenmodulation wie der zur Aufzeichnung verwendete Objektstrahl 12 auf.

Weil die durch das Sicherheitsmerkmal einem einfallenden Lichtstrahl aufgeprägte Phaseninformation als solche nicht sichtbar ist, muß diese Phaseninformation beim Auslesen des Sicherheitsmerkmals in ein Amplitudenbild umgewandelt werden. Dazu gibt es verschiedene, u.a. aus der Mikroskopie bekannte Techniken wie beispielsweise die Dunkelfeldmethode, das Phasenkontrastverfahren sowie das Schlierenverfahren. Das Grundprinzip der drei Techniken ist in Fig. 5 veranschaulicht. Hier wird eine einfallende phasenmodulierte Welle 15 mittels eines Objektivs oder einer Linse 16 auf eine Mattscheibe 17 abgebildet. Würde man im Strahlengang keinerlei Manipulation vornehmen, so würde die Mattscheibe 17 gleichmäßig hell erleuchtet erscheinen. Um die Phasendifferenzen sichtbar zu machen, wird eine Blende in den Strahlengang eingeführt, und zwar an der Fourier-Ebene.

Bei der Dunkelfeldmethode wird eine Blende 18 verwendet, in deren Mittelpunkt sich eine Schwärzung 19 befindet, welche die Nullte Beugungsordnung herausfiltert. Ähnlich funktioniert das Schlierenverfahren, bei dem die Nullte Beugungsordnung mit Hilfe einer in den Strahlengang ragenden scharfen Spitze ausgeblendet wird. In beiden Fällen ist auf der Mattscheibe 17 ein Amplitudenbild 20 der aufgeprägten Phaseninformation zu sehen.

Beim Phasenkontrastverfahren wird eine Blende 20 in den Strahlengang eingebracht, welche einen sog. Phasenring 21 enthält. Licht, das den Phasenring 21 durchstrahlt, ist gegenüber dem übrigen Licht phasenverschoben. Durch den Phasenring wird eine Phasenverschiebung zwischen den verschiedenen Beugungsordnungen eingeführt. Das Ergebnis ist, daß die Phasenmodulation der einfallenden Welle 15 in eine Amplitudenmodulation umgewandelt wird, die auf dem Schirm 17 sichtbar wird.

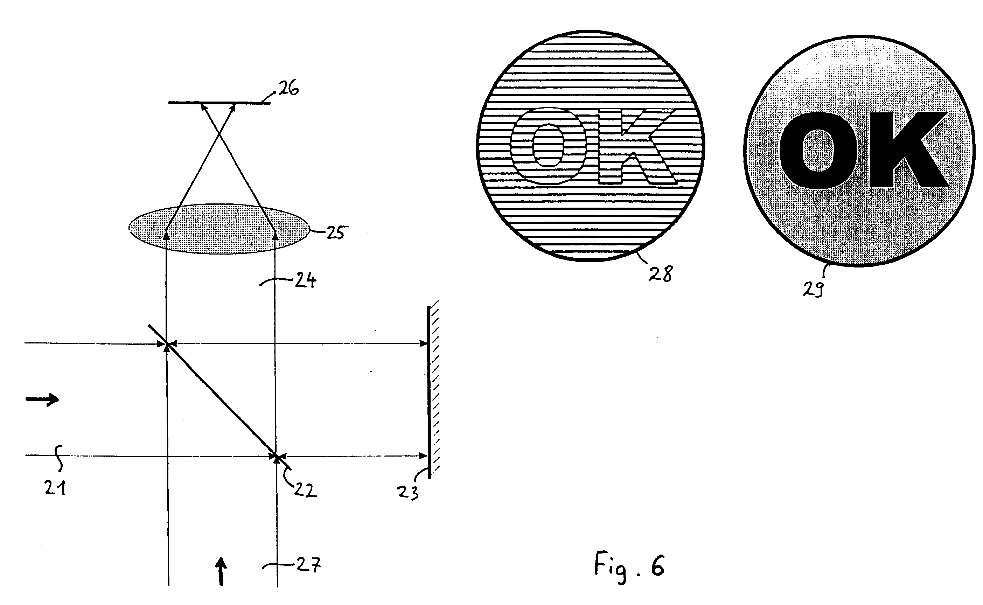

In Fig. 6 ist ein Interferometer vom Michelson-Typ gezeigt, mit dessen Hilfe eine Phasenmodulation ebenfalls sichtbar gemacht werden kann. Bei einem Interferometer erfolgt die Umwandlung einer Phasen- in eine Amplitudenmodulation dadurch, daß die Objektwelle mit einer Referenzwelle interferiert. Je nach relativer Phasenlage zwischen den beiden Wellen kommt es zu konstruktiver bzw. destruktiver Interferenz.

Bei dem in Fig. 6 gezeigten Interferometer beaufschlagt der phasenmodulierte Objektstrahl 21 den halbdurchlässigen Spiegel 22, der einen Teil des einfallenden Lichts nach unten ablenkt. Der nicht abgelenkte Teil des Objektstrahls 21 wird von dem stationären Spiegel 23 reflektiert und gelangt erneut zu dem halbdurchlässigen Spiegel 22. Wieder wird ein Teil des Objektstrahls reflektiert (Strahl 24) und mittels des Objektivs bzw. der Linse 25 auf die Mattscheibe 26 projiziert.

Der halbdurchlässige Spiegel 22 wird außerdem von der Referenzwelle 27 beaufschlagt. Ein Teil der Referenzwelle wird reflektiert, der andere Teil wird transmittiert, und dieser transmittierte Teil der Referenzwelle wird durch das Objektiv bzw. die Linse 25 ebenfalls auf den Schirm 26 abgebildet. Durch die Überlagerung der beiden Wellen entsteht auf der Mattscheibe 26 ein Interferenzmuster. Je nach dem, ob die Mattscheibe 26 im Hinblick auf die Spiegel 22 und 23 verkippt ist oder nicht, entsteht entweder das Interferenzbild 28 (für den Fall einer verkippten Mattscheibe) oder das Interferenzbild 29 (bei optimaler Justierung der Mattscheibe). Anstatt das Interferenzbild auf einer Mattscheibe darzustellen, ist es auch möglich, das Interferenzbild mit einer Kamera aufzuzeichnen. Dies hat den Vorteil, daß das Interferenzbild dann in digitaler Form vorliegt und einem Bildverarbeitungssystem zugeführt werden kann.

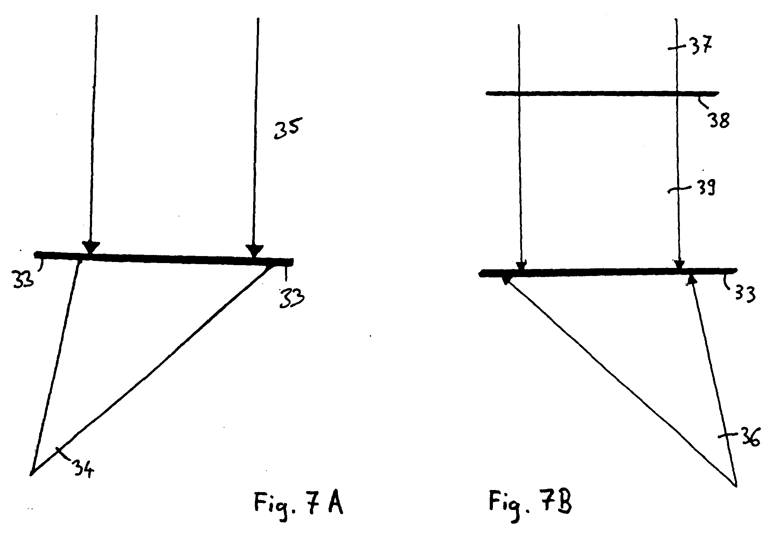

In den Figuren 7A und 7B ist eine spezielle Art der Doppelbelichtung eines Hologramms gezeigt. Figur 7A stellt die erste Belichtung des holografischen Films 33 dar. Der erste Referenzstrahl 34 trifft unter einem ersten Einfallswinkel auf den holografischen Film 33. Von der anderen Seite her beaufschlagt der Objektstrahl 35 den holografischen Film 33 und interferiert mit dem Referenzstrahl 34. Das Interferenzbild wird als erste Belichtung auf dem holografischen Film 33 aufgezeichnet.

Bei der gewählten Aufnahmegeometrie treffen Referenz- und Objektstrahl von entgegengesetzten Seiten auf den holografischen Film. Ein derart aufgenommenes Hologramm kann nach seiner Entwicklung durch einen von der Betrachterseite her einfallenden Lichtstrahl rekonstruiert werden, es handelt sich also um ein Reflexionshologramm.

Nachdem der holografische Film 33 entsprechend Figur 7A belichtet worden ist, wird er noch einer zweiten Belichtung gemäß Figur 7B ausgesetzt. Die zweite Belichtung erfolgt mit einem zweiten Referenzstrahl unter einem zweiten Einfallswinkel, der vom ersten Einfallswinkel verschieden ist. Um den Objektstrahl zu erhalten, durchläuft eine Wellenfront 37 ein Phasenobjekt 38, und es entsteht der Objektstrahl 39, der eine Phasenmodulation aufweist. Dadurch kann dem Objektstrahl eine Information aufgeprägt werden, beispielsweise ein Text, ein Emblem oder ein Schriftzug. Die Objektwelle 39 und der zweiten Referenzstrahl 36 erzeugen ein Interferenzbild, das während der zweiten Belichtung auf dem holografischen Film 33 aufgezeichnet wird.

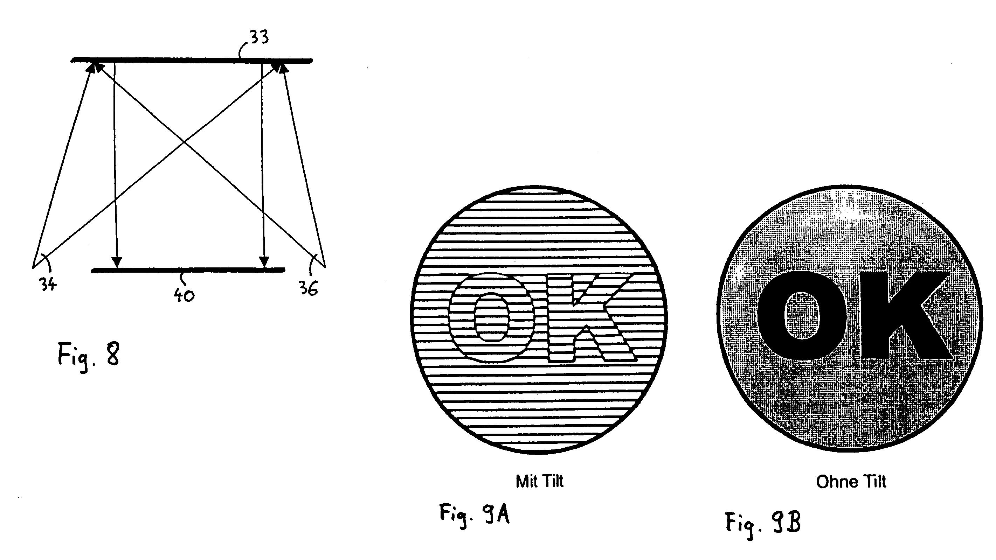

In Figur 8 ist dargestellt, wie das doppelbelichtete Hologramm rekonstruiert werden kann. Wenn man das entwickelte Hologramm 33 mit dem zweiten Referenzstrahl 36 unter dem zweiten Einfallswinkel beaufschlagt, so wird die phasenmodulierte Welle rekonstruiert. Phasenmodulationen sind aber für das Auge unsichtbar.

Um die Phaseninformation sichtbar zu machen, muß das Hologramm 33 zugleich mit dem ersten Referenzstrahl 34 unter dem ersten Einfallswinkel und mit dem zweiten Referenzstrahl 36 unter dem zweiten Einfallswinkel beaufschlagt werden. Der erste Referenzstrahl 34 rekonstruiert eine Lichtwelle ohne Phasenmodulation. Der zweite Referenzstrahl 36 rekonstruiert eine Objektwelle, der eine Information als Phasenmodulation aufgeprägt ist. Zwischen den beiden rekonstruierten Wellenfronten kommt es zur Interferenz, und durch diese Interferenz wird die unsichtbare Phasenmodulation in eine sichtbare Amplitudenmodulation umgewandelt. Diese Amplitudenmodulation wird auf der Mattscheibe 40 sichtbar. Je nachdem, ob die Mattscheibe einen gewissen Neigungswinkel (Tilt) relativ zu den interferierenden Wellenfronten aufweist oder nicht, entsteht entweder das in Figur 9A oder das in Figur 9B dargestellte Mattscheibenbild.

Ein sichtbares Mattscheibenbild entsteht nur, wenn die von dem zweiten Referenzstrahl rekonstruierte phasenmodulierte Objektwelle mit der von dem ersten ReferenzLichtstrahl rekonstruierten ungestörten Welle überlagert wird. Insofern wirkt das doppelbelichtete Hologramm 33 wie ein „integriertes holografisches Interferometer": wie bei einem Interferometer wird die Interferenz zwischen einer gestörten Welle und einer ebenen Wellenfront sichtbar gemacht.

Wichtig für die Anwendung der beschriebenen Doppelbelichtungstechnik als Sicherheitsmerkmal ist, daß die Information weder durch den ersten Referenzstrahl 34 allein noch durch den zweiten Referenzstrahl 36 allein erhalten werden kann. Nur wenn beide Referenzstrahlen unter den jeweils richtigen Einfallswinkeln den holografischen Film beaufschlagen, kann die gespeicherte Information erhalten werden.

## Patentansprüche

1. Sicherheitsmerkmal, welches auf einem Träger, beispielsweise einem Dokument, einem Ausweis, einer Banknote oder einer Plastikkarte angebracht ist, wobei durch das Sicherheitsmerkmal einem auf das Sicherheitsmerkmal einfallenden Lichtstrahl ein Phasenprofil aufmodulierbar ist.

2. Sicherheitsmerkmal nach Anspruch 1, welches eine auf dem Träger aufgebrachte Schicht umfaßt, wobei die Schicht eine variierende Schichtdicke aufweist, und wobei durch die Schicht einem einfallenden Lichtstrahl ein der Schichtdickenvariation entsprechendes Phasenprofil aufmodulierbar ist.

3. Sicherheitsmerkmal nach Anspruch 1 oder 2, welches eine auf dem Träger aufgebrachte Schicht umfaßt, wobei die Schicht einen variierenden Brechungsindex aufweist, und wobei durch die Schicht einem einfallenden Lichtstrahl ein der Brechungsindexvariation entsprechendes Phasenprofil aufmodulierbar ist.

4. Sicherheitsmerkmal nach Anspruch 1, welches ein auf dem Träger angebrachtes Hologramm umfaßt, wobei durch einen auf das Hologramm einfallenden Lichtstrahl ein Objektstrahl mit einem aufmodulierten Phasenprofil rekonstruierbar ist.

5. Sicherheitsmerkmal nach Anspruch 4, dadurch gekennzeichnet, daß der auf das Hologramm einfallende Lichtstrahl ein Bild eines Phasenobjekts erzeugt.

6. Sicherheitsmerkmal nach Anspruch 4 oder 5, dadurch gekennzeichnet, daß das Hologramm durch Aufzeichnung des Interferenzbildes hergestellt ist, welches durch die Interferenz eines Referenzstrahls und eines durch ein Phasenobjekt geführten Objektstrahls entsteht.

7. Sicherheitsmerkmal nach einem der Ansprüche 1 bis 6, dadurch gekennzeichnet, daß das aufmodulierte Phasenprofil mittels des Phasenkontrastverfahrens darstellbar ist, wobei mittels des Phasenkontrastverfahrens das aufmodulierte Phasenprofil in eine Amplitudenmodulation umwandelbar ist.

8. Sicherheitsmerkmal nach einem der Ansprüche 1 bis 6, dadurch gekennzeichnet, daß das aufmodulierte Phasenprofil mittels des Schlierenverfahrens darstellbar ist, wobei mittels des Schlierenverfahrens das aufmodulierte Phasenprofil in eine Amplitudenmodulation umwandelbar ist.

9. Sicherheitsmerkmal nach einem der Ansprüche 1 bis 6, dadurch gekennzeichnet, daß das aufmodulierte Phasenprofil mittels eines Interferometers darstellbar ist, wobei durch das Interferometer das aufmodulierte Phasenprofil in eine Amplitudenmodulation umwandelbar ist.

10. Verfahren zum Auslesen eines Sicherheitsmerkmals, bei dem es sich um ein Sicherheitsmerkmal gemäß einem der Ansprüche 1 bis 6 handelt, welches die folgenden Schritte aufweist:

   a) Beaufschlagen des Sicherheitsmerkmals mit einem Lichtstrahl, wobei dem Lichtstrahl durch das Sicherheitsmerkmal ein Phasenprofil aufmoduliert wird,

   b) Umwandeln des aufmodulierten Phasenprofils in eine Amplitudenmodulation.

11. Verfahren zum Auslesen eines Sicherheitsmerkmals gemäß Anspruch 10, dadurch gekennzeichnet, daß das aufmodulierte Phasenprofil mittels des Phasenkontrastverfahrens in eine Amplitudenmodulation umgewandelt wird.

12. Verfahren zum Auslesen eines Sicherheitsmerkmals nach Anspruch 10, dadurch gekennzeichnet, daß das aufmodulierte Phasenprofil mittels des Schlierenverfahrens in eine Amplitudenmodulation umgewandelt wird.

13. Verfahren zum Auslesen eines Sicherheitsmerkmals gemäß Anspruch 10, dadurch gekennzeichnet, daß das aufmodulierte Phasenprofil mittels eines Interferometers in eine Amplitudenmodulation umgewandelt wird.

14. Sicherheitsmerkmal, welches ein auf einem Träger, beispielsweise einem Dokument, einem Ausweis, einer Banknote oder einer Plastikkarte aufgebrachtes Hologramm umfaßt, wobei durch einen unter einem ersten Einfallswinkel auf das Hologramm einfallenden ersten Lichtstrahl ein erster Objektstrahl mit einem aufmodulierten Phasenprofil rekonstruierbar ist, wobei durch einen unter einem zweiten Einfallswinkel auf das Hologramm einfallenden zweiten Lichtstrahl ein zweiter Objektstrahl rekonstruierbar ist, welcher keine Phasenmodulation aufweist, und wobei durch die Interferenz zwischen dem ersten und dem zweiten Objektstrahl eine Amplitudenmodulation entsteht, die dem aufmodulierten Phasenprofil des ersten Objektstrahls entspricht.

15. Verfahren zum Auslesen eines Sicherheitsmerkmals, bei dem es sich um ein Sicherheitsmerkmal gemäß Anspruch 14 handelt, welches die folgenden Schritte aufweist:

   a) Beaufschlagen des Hologramms mit einem ersten Lichtstrahl unter einem ersten Einfallswinkel, wodurch ein erster Objektstrahl rekonstruiert wird,

   b) Beaufschlagen des Hologramms mit einem zweiten Lichtstrahl unter einem zweiten Einfallswinkel, wodurch ein zweiter Objektstrahl rekonstruiert wird,

   c) Erfassen des durch die Interferenz der beiden Objektstrahlen entstehenden Interferenzbildes.

16. Verfahren zum Auslesen eines Sicherheitsmerkmals gemäß Anspruch 15, dadurch gekennzeichnet, daß das durch die Interferenz der beiden Objektstrahlen entstehende Interferenzbild auf einer Mattscheibe aufgefangen wird.

17. Verfahren zum Auslesen eines Sicherheitsmerkmals gemäß Anspruch 15, dadurch gekennzeichnet, daß das durch die Interferenz der beiden Objektstrahlen entstehende Interferenzbild mit einer Kamera erfaßt wird.

18. Verfahren zur Herstellung eines Sicherheitsmerkmals, bei dem es sich um ein Sicherheitsmerkmal gemäß Anspruch 14 handelt, welches die folgenden Schritte aufweist:

   a) Aufzeichnen eines ersten Interferenzbildes, welches durch einen unter einem ersten Einfallswinkel einfallenden ersten Referenzstrahl und durch einen ersten Objektstrahl erzeugt wird, wobei dem ersten Objektstrahl ein Phasenprofil aufmoduliert ist, und

b) Aufzeichnen eines zweiten Interferenzbildes, welches durch einen unter einem zweiten Einfallswinkel einfallenden zweiten Referenzstrahl und durch einen zweiten Objektstrahl erzeugt wird, wobei dem zweiten Objektstrahl kein Phasenprofil aufmoduliert ist.

**19.** Verfahren zur Herstellung eines Sicherheitsmerkmals gemäß Anspruch 18, dadurch gekennzeichnet, daß dem ersten Objektstrahl ein Phasenprofil aufmoduliert wird, indem er durch ein Phasenobjekt geführt wird.

$$\Delta\Phi = \frac{2\pi}{\lambda}\, n \cdot \Delta d$$

Fig. 1

$$\Delta\Phi = \frac{2\pi}{\lambda}\, \Delta n \cdot d$$

Fig. 2

EP 1 060 908 A2

Fig. 3

Fig. 4

Fig. 5

Fig. 6

Fig. 7B

Fig. 7 A

33

34    40    36

Fig. 8

Mit Tilt

Fig. 9A

Ohne Tilt

Fig. 9B